# EUROPEAN PATENT APPLICATION

(11) **EP 0 860 118 A2**
(43) Date of publication of application: **26.08.1998**
(21) Application number: 98830082.8
(22) Date of filing: 19.02.1998
(51) Int. Cl.: A22C 11/00

(54) **Method for preparing and packing würstel**

(30) Priority: 21.02.1997 IT BZ970010
(71) Applicant: Senfter S.p.A., 39038 San Candido (BZ) (IT)
(72) Inventor: Senfter, Franz, 39038 San Candido (BZ) (IT)
(74) Representative: Ghioni, Carlo Raoul Maria

(57) **Abstract**

Method for preparing and packing Würstel, comprising the following operating phases:
a) on a strip of film made of synthetic material are affixed recognisable markings delimiting sections of the strip of film;
b) on each of these sections of the strip of film is printed a label in a freely determinable position, in particular a centred position;
c) a continuous casing is created by joining the longitudinal edges of the strip of film;
d) the mixture is stuffed into the continuous casing;
e) in correspondence with each marking, the casing is closed and subsequently cut, giving rise to Würstel in a paste state;
f) the Würstel in a paste state are cooked in an autoclave thus reaching a solid state;
g) the cooked Würstels are cooled.

## Description

The present invention relates to a method for preparing and packing Würstel.

The most traditional technique for preparing Würstel, wherein a cellulose casing is used, presents drawbacks such as the loss of weight by the Würstel upon cooking or the presence of the peeling phase of the Würstel after cooking and of the pasteurisation of the packed Würstel. To eliminate such drawbacks the use of casing made of synthetic material instead of the cellulose casing is known in the prior art.

The casing made of synthetic material is not permeable like the cellulose one, so that it represents a barrier from the outside environment, both with respect to germs and with respect to fluid loss during the cooking process. Thus the synthetic casing wherein the Würstel was cooked can be left as the package with which the Würstel is sold. This allows greatly to simplify the preparation and packing process, since the traditional phases of peeling the cellulose casing, of packing the peeled Würstel and of pasteurising the packed Würstel are no longer required.

In this way in addition to rendering more economical the preparation and packing process, a Würstel is also obtained with better nutritional and vitamin properties, since without pasteurisation the Würstel is heated only once upon cooking and not twice (cooking and pasteurising) as in the more traditional method.

The synthetic material casing comprises a continuous strip of film made of synthetic material which is closed at its edges to form a tube. The casing can be neutral, i.e. without captions, or even printed, in such a way that is may report commercial or informational messages for the consumer.

The print reported thereon is continuous, i.e. the same motif is repeated indefinitely with continuity over the entire casing, for instance the denomination of a trademark and/or a product label.

Such casing can be purchased commercially and it is supplied in a form that is closely folded back unto itself in the manner of an accordion. Its length is variable at will and upon its utilisation it is progressively laid out to form a tube.

The known method provides for the casing to be progressively laid out to form a tube, wherein the mixture is then packed. The casing thus filled is subsequently closed and cut at regular intervals obtaining Würstel in a paste state which are then cooked and subsequently cooled.

This prior art method for preparing and packing Würstel however still presents some drawbacks.

With this method it is not possible to obtain a Würstel which presents a label printed directly on the casing in a freely defined and definable position, preferably in a centred position. The term label is to be taken in the general sense as any set of information of a commercial or inforinational nature, of trademarks, of ornamental or presentational elements, reported as mandated by law or for commercial reasons on the casing of the Würstel.

In the case of a neutral, i.e. not printed, casing, it is not possible to print a label directly on the casing before its use, either when it is in its initial form folded back as an accordion, because it is inaccessible, or when it has been filled with the mixture, because printing on it is no longer feasible, so this must be obviated by applying in an additional onerous phase of the method an adhesive label onto the neutral casing.

With reference to the printed casing, even in the case wherein the print already contains the label, the repeated continuity of the print, without recognisable points, of this label, does not allow to have a positioning which can be defined at will, nor the centring, of the label on the casing of the Würstel. The cuts to form the Würstel always take place in different points of the casing, i.e. they undergo a progressive displacement along the casing, and they are therefore such as to cut offthe casing in random points, and therefore they also may cut off the labels in any point whatsoever.

Thus in this case as well it is necessary to apply an adhesive label onto the printed casing in a subsequent phase of the method.

An additional drawback consists of the fact that it is not possible to apply a so-called rip-out opening, in order for the Würstel to be easily extracted from the package.

Such rip-out openings are known and they consist of a filament applied to the package. Thus in the case at hand the filament has to be applied, for example by gluing, to the casing, so that by pulling on the filament the part of casing attacked thereto is ripped and the Würstel can be extracted from the open casing, i.e. from its package.

The casing used in this known method, however, at the beginning is in its initial form folded like an accordion, which does not allow accessibility thereto and subsequently, once it has been filled with the mixture, it is not possible to apply a filament along its perimeter, as would be necessary, due to the round shape assumed by the casing. On the other hand, even if the rip-out opening were to be applied at regular intervals when manufacturing the printed casing, before folding it like an accordion, an additional drawback would still present itself.

It is not possible, in fact, to determine the position of the rip-out opening on the casing of the Würstel. Similarly to what takes place for the label, the rip-out opening too could find itself in any point of the casing, while the optimal position of such rip-out opening is in proximity to the end of the Würstel.

Essential object of the present invention is to develop the known method described previously, devising a method for preparing and packing Würstel wherein the Würstel packed directly in their casing present labels printed on the casing in a position that is freely determinable, preferably in a centred position.

An additional purpose of the present invention is to make the method constituting the subject of the present invention allow to obtain Würstel which present on their casing, wherein they are packed, a rip-out opening, whose position on the casing is freely determinable and which is found preferably in proximity to one of the ends of the Würstel. This and other objects besides are attained by the method for preparing and packing Würstel constituting the subject of the present invention, whose main characteristics are illustrated in the claims that follow.

With the method that is the subject of the present invention it is now certainly possible without difficulties to obtain Würstel packed in their synthetic cooking casing, for which the label is located in a position that can be determined at will, preferably in a centred position. The presence of recognisable markings delimits the section of the film strip whereon the label is to be printed, allowing to print the label in a position determinable at will, in particular in a centred position. Markings are then recognisable also at the time of cutting, so that it is possible to cut the casing in correspondence with these markings and hence to obtain a section of casing, the future Würstel, presenting the label printed on the casing in the required position, in particular in a centred position.

Moreover there is no difficulty in applying to each section of the film strip a rip-out opening that is optimally positioned, i.e. in proximity to one of the ends of the Würstel, both because the rip-out opening is to be applied to a plane and not a curved surface and because the markings allow the precise positioning thereof onto the film strip section.

Particularly advantageous is providing for the method phase according to claim 4. With the prior art method, until now it was not possible to print the expiration date directly on the casing and it made no sense to pre-print it on the casing before folding it as an accordion, since doing so would have obliged to use the entire casing on the same manufacturing day referred to that expiration date. Therefore the expiration date was reported on the adhesive label applied to each individual Würstel or three or more Würstel were inserted in an additional package reporting the expiration date.

Today, however, it is possible to print the expiration date and the day of manufacturing directly on the casing.

Additional characteristics and advantages of the present invention shall be made clearer in the detailed description that follows of an example provided purely by way of non limiting indication.

The method for preparing and packing Würstel constituting the subject of the present invention provides for the use of a strip of film made of synthetic material. Conveniently such film strip is made of PVDC, i.e. of polyvinylidenchloride, since this material presents optimal characteristics for packing but also with respect to the temperatures involved in the method.

Conveniently the film strip can be pre-printed with a continually repea.ted motif, in the manner of the casing used in the prior art method. The motif in this case may have a function as a decoration and ornament of the Würstel package.

In a first phase of the method, onto a strip of film made of synthetic material are affixed recognisable markings delimiting sections of the strip of film. The presence of such markings allows to recognise the beginning and the end of each section of the strip of film and the distance ofthe markings defines the length of the Würstel which will be obtained using that section of the strip of film. Obviously depending on the type of Würstel to be prepared it will be possible to set differently the distance of the markings affixed onto the strip of film, according to the size of the Würstel to be prepared.

In the subsequent phase b of the method on each section of the film strip is printed a label in a freely determinable position. Preferably such label shall be printed in a centred position.

The label is thus reported directly on the casing and its positioning and respectively centring does not cause any difficulties due to the presence of the markings. Such label may report any sort of information which is deemed appropriate, including trade marks or ornamental elements of the product.

Conveniently this phase b of the method can be followed by the phase b1 of the method wherein on each section of the film strip is applied a so called rip-out opening. The phase b1 of the method is of great importance with reference to the usability of the packed Würstel. Since each section ofthe film strip is provided with one such rip-out opening, also all respective Würstel packed with such sections of the film strip are provided with such rip-out opening, which allows a simple and easy opening of the printed casing serving as a package. The optimal position of such rip-out opening provides for it to be applied to the film strip in proximity to one of the ends of each of the sections of the film strip, so that then for each Würstel it will find itself in proximity to an end thereof. In this case as well such position is perfectly determinable by means of the markings.

Conveniently the phase b or b1 of the method can be followed by the phase b2 of the method, wherein on each section of the film strip is printed the expiration date of the Würstel. This possibility to print, directly onto the casing, updated or updatable data such as the expiration date did not exist in the prior art method. It is advantageous because it allows to use the same strip of film on different manufacturing days, since the constraint of observing an expiration date printed previously has been removed.

In the subsequent phase c of the method a continuous casing is created, joining the longitudinal edges of the strip of film. Thereupon the rip-out openings remain on the outer side of the casing thus created. Conveniently the edges are joined through high frequency electromagnetic wave sealing.

In the subsequent phase d of the method the mixture is stuffed into the continuous casing, which is thus filled.

Thereupon with the phase e of the method the casing is closed, for instance with metal clips, in correspondence with each marking and there it is cut.

Such cut gives rise to sections of casing printed, filled with mixture and closed at the ends. One such section of casing gives rise to a Würstel in a paste state.

During the subsequent phase f of the method the Würstel in a paste state are cooked, for instance in an autoclave. Lastly in the phase g of the method the cooked Würstel are cooled off.

In this way with such method individually packed Würstel are obtained, for which the cooking casing itself serves as a package and which present in respective perfectly determinable optimal positions a rip-out opening and a label.

The present invention thus attains the set purposes.

Obviously it may assume, in its embodiment, also forms and configurations differing from the one illustrated above without thereby departing from the scope of the present invention.

Moreover, all components may be replaced by technically equivalent elements and any shape, size and material may be used depending on the requirements.

## Claims

1. Method for preparing and packing Würstel, characterised in that it comprises the following operating phases:
a) on a strip of film made of synthetic material are affixed recognisable markings delimiting sections of the strip of film;
b) on each of these sections of the strip of film is printed a label in a freely determinable position, in particular a centred position;
c) a continuous casing is created by joining the longitudinal edges of the strip of film;
d) the mixture is stuffed into the continuous casing;
e) in correspondence with each marking, the casing is closed and subsequently cut, giving rise to Würstel in a paste state;
f) the Würstel in a paste state are cooked in an autoclave thus reaching a solid state;
g) the cooked Würstels are cooled.

2. Method according to claim 1, characterised in that after the phase b) it further comprises the phase:
b1) on each section of the strip of film is applied in a freely determinable position, in particular in proximity to an end of the section of the strip of film, a so-called rip-out opening.

3. Method according to claim 1 or 2, characterised in that the junction of the edges provided for in the phase c) takes place by means of high frequency electromagnetic wave sealing.

4. Method according to claim 1 or 2, characterised in that after the phase b) or b1) it further comprises the phase:
b2) on each section of the strip of film is printed the expiration date of the Würstel.

5. Method according to claim 1 or 2, characterised in that in the phase e) the casing is closed by means of wire clips.

6. Method according to claim 1 or 2, characterised in that the strip of film is made of PVDC, i.e. of polyvinylidenchloride.

7. Method according to claim 1 or 2, characterised in that the strip of film is pre-printed with a continually repeated motif.

8. Method according to claim 2, characterised in that in the phase c) the rip-out openings remain on the outer side of the casing.
